(19) Europäisches Patentamt / European Patent Office / Office européen des brevets

(11) **EP 1 995 897 A1**

(12) **EUROPEAN PATENT APPLICATION**

(43) Date of publication:
**26.11.2008 Bulletin 2008/48**

(51) Int Cl.:
*H04B 17/00* (2006.01)

(21) Application number: **07108553.4**

(22) Date of filing: **21.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Research In Motion Limited**
**Waterloo, Ontario N2L 3W8 (CA)**

(72) Inventors:
• **Qi, Yihong**
**St. Agatha, Ontario N0B 2L0 (CA)**

• **Certain, Michael**
**Kitchener, Ontario N2G 4K3 (CA)**
• **Jarmuszewski, Perry**
**Waterloo, Ontario N2V 2R6 (CA)**
• **Zhou, Qingmai**
**Waterloo, Ontario N2V 2K7 (CA)**

(74) Representative: **Fennell, Gareth Charles et al**
**Kilburn & Strode**
**20 Red Lion Street**
**London WC1R 4PJ (GB)**

(54) **Method for testing a radio frequency (RF) receiver and related methods**

(57)    A method for testing a radio frequency (RF) receiver may include measuring a plurality of bit error levels for the RF receiver at a given RF frequency. The method may further include applying a Huber function to the measured plurality of bit error levels to generate a bit error ratio (BER) estimate for the RF receiver. The method would also include using the BER estimate to generate a sensitivity for the RF receiver.

**FIG. 1**

**Description**

**Field of the Invention**

The present invention relates to the field of communications systems, and, more particularly, to wireless communications systems and related methods.

**Background of the Invention**

Radio sensitivity measurement plays an important role in evaluating a radio frequency (RF) radio receiver's ability to detect a weak signal in either a controlled or real application environment. Radio sensitivity and receive antenna gain together determine the total isotropic sensitivity (TIS), which determines the radio downlink performance.

Radio sensitivity is defined as a receiving power level at the input of the radio when the bit error ratio (BER) of the radio reaches its threshold level. For a Global System for Mobile Communications (GSM) system, a BER of 2.44 is the defined threshold BER level. BER measurement accuracy and measurement time can directly affect radio sensitivity measurement accuracy and time.

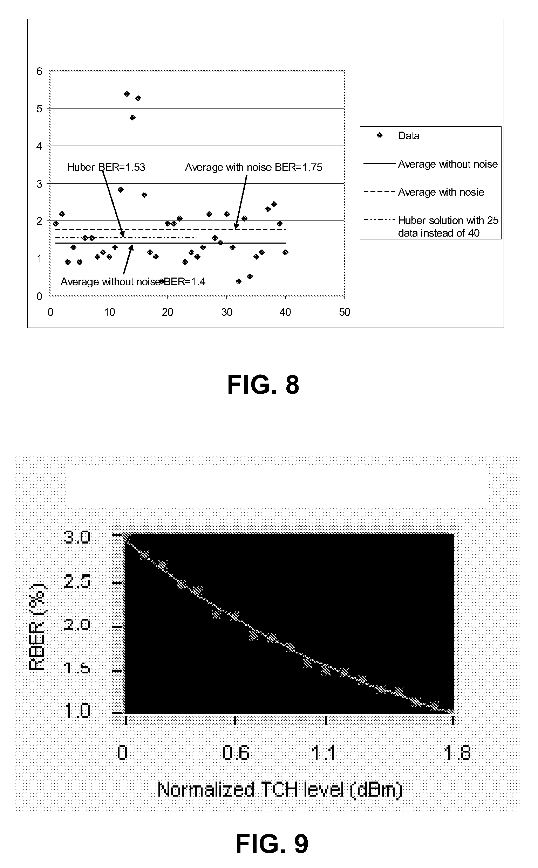

The relationship of BER and sensitivity is shown in the graph of FIG. 9. Since BER fluctuates significantly in real sensitivity measurements, an average value of BER is typically used for estimating the sensitivity of the receiver. Yet, due to large spurious noise in the real communication environment and/or the radio itself, and sudden changes in the test environment, the average BER may even change significantly.

One exemplary approach for estimating a channel bit error ratio in a receiver is set forth in U.S. Patent No. 6,792,053 to Vainio et al. A pseudo bit error ratio of a channel is determined in a receiver comprising detecting means for detecting a data sequence of a received signal, decoding means for decoding a first encoding of the detected data signal, and re-encoding means for re-encoding with the first encoding the data sequence decoded from the first encoding. The receiver further comprises quality determining means for providing the detected data sequence with a value for quality, and estimating means for estimating the bit error ratio-provided that the quality of the detected data sequence fulfils a predetermined quality requirement by comparing the detected data sequence with the data sequence re-encoded with first encoding.

Despite the existence of such systems, further improvements in determining or estimating BER in communications systems, particularly wireless communications systems, may be desirable.

**Brief Description of the Drawings**

FIG. 1 is a schematic block diagram of an exemplary test system for testing an RF receiver in accordance with one aspect.

FIG. 2 is a schematic block diagram of an alternative test system for testing an RF receiver.

FIG. 3 is a flow diagram of a method for testing an RF receiver in accordance with one exemplary aspect.

FIGS. 4-8 are graphs of bit error levels vs. sample numbers and further illustrating average BER levels and BER levels obtained using the system and methods of FIGS. 1-3.

FIG. 9 is a graph of BER vs. normalized TCH level function.

FIG. 10 is a schematic block diagram illustrating exemplary components of a mobile wireless communications device for use with the present invention.

**Detailed Description of the Preferred Embodiments**

The present description is made with reference to the accompanying drawings, in which preferred embodiments are shown. However, many different embodiments may be used, and thus the description should not be construed as limited to the embodiments set forth herein. Rather, these embodiments are provided so that this disclosure will be thorough and complete. Like numbers refer to like elements throughout.

Generally speaking, a method is disclosed herein for testing a radio frequency (RF) receiver. More particularly, the method may include measuring a plurality of bit error levels for the RF receiver at a given RF frequency, and applying a Huber function to the measured plurality of bit error levels to generate a bit error ratio (BER) estimate for the RF receiver.

The method may also include using the BER estimate to generate a sensitivity for the RF receiver. More particularly, the Huber function may be defined as:

$$\rho_k(f) = \begin{cases} f^2/2 & if & |f| \le k \\ k|f| - k^2/2 & if & |f| > k \end{cases}$$

where k is a positive constant.
Further, k may be defined as:

$$k = 2\sqrt{\frac{\sum_1^n (x_i - x_0)}{n-1}},$$

where $x_0$ is an initial bit error level and n is a total number of bit error levels. Furthermore, the initial bit error level $x_0$ may be defined as:

$$x_o = \frac{\sum_i^n x_i}{n}.$$

By way of example, k may be within a range of about 0.8 to 1.4.

Measuring may include measuring the plurality of bit error levels within an anechoic RF chamber. In other embodiments, the measurements may be performed in an outdoor environment. The BER estimate may comprise a residual BER (RBER) estimate, for example. Also by way of example, the RF receiver may be a Global System for Mobile Communications (GSM), General Packet Radio Service (GPRS), and/or an Enhanced Data Rates for Global System for Mobile Communications (GSM) Evolution (EDGE) receiver.

In addition, a test system for testing an RF receiver may include an RF source and a test controller coupled to the RF receiver. More particularly, the test controller may be for measuring a plurality of bit error levels for the RF receiver based upon transmissions from the RF source at a given RF frequency, and applying a Huber function to the measured plurality of bit error levels to generate a BER estimate for the RF receiver.

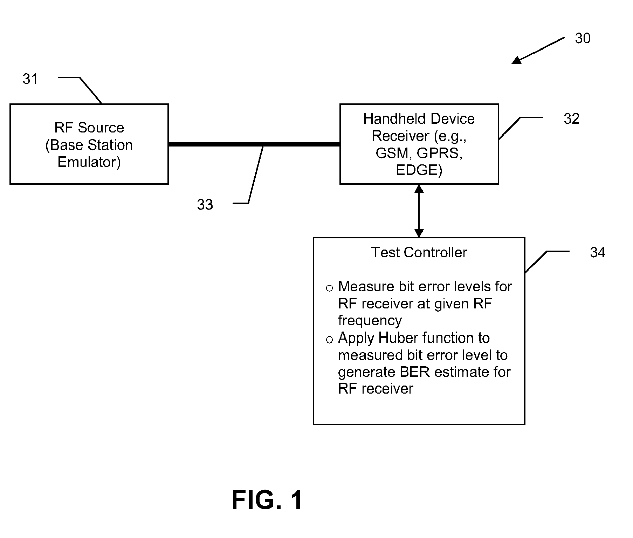

Referring initially to FIG. 1, a test system **30** for testing an RF receiver **32,** such as a cellular communications receiver, is first described. The system **30** illustratively includes an RF test source **31** coupled to the receiver **32** to be tested via an RF cable **33.** By way of example, the device receiver **32** may be a Global System for Mobile Communications (GSM) receiver, a General Packet Radio Service (GPRS) receiver, and/or an Enhanced Data Rates for Global System for Mobile Communications (GSM) Evolution (EDGE) receiver, for example. Of course, other suitable wireless receivers may also be used.

In addition, the RF source **31** may be one of a Rohde and Schwartz universal radio communication tester CMU 200 or an Agilent 8960 base station emulator, for example, although other suitable emulators and/or RF test sources may also be used. A test controller **34** is connected to the device receiver **32** for performing various test operations and measurements, which will be discussed in further detail below. It should be noted that while the RF source **31** and test controller **34** are illustrated as separate components in the FIG. 1, the functions of the RF source and test controller may in fact be performed by the same base station emulator, for example. Alternately, the test controller **34** could be a computer or computing device separate from the RF source **31,** as will be appreciated by those skilled in the art.

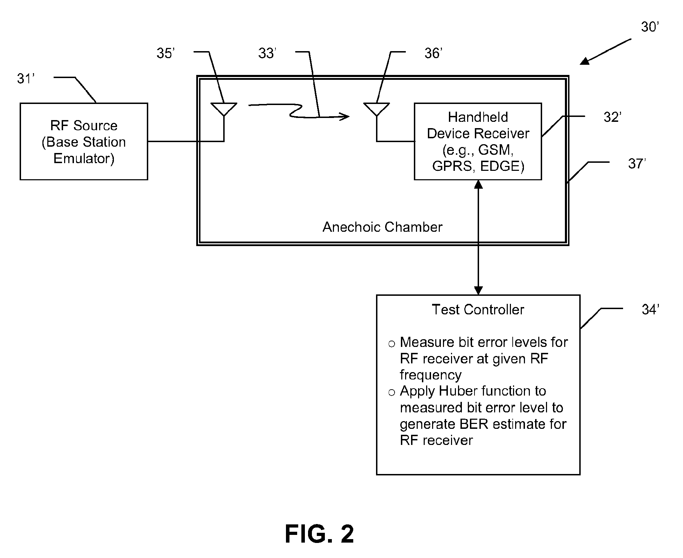

Turning now to FIG. 2, an alternative test system **30'** is now described. The test system **30'** includes the RF source **31'** (e.g., a base station emulator), an RF controlled enclosed environment, and the wireless handheld device receiver **32'.** As will be appreciated by those skilled in the art, an RF controlled enclosed environment is an electromagnetic (EM) wave shield environment, such as the illustrated EM anechoic chamber **37'** (which may be a full or semi-anechoic chamber), a shield room or an RF enclosure. An antenna **35'** connected to the RF source **31'** is positioned within the anechoic chamber **37'** and connected to the RF source **31'** by a coaxial cable to simulate a base station. An antenna **36'** for the device receiver **32'** is also positioned within the anechoic chamber **37'** and connected to the receiver.

It should be noted that in typical tests the handheld receiver **32'** and antenna **36'** will be carried by a device housing, but these components may be tested without the device housing if desired. Moreover, the open-air testing need not be performed in the anechoic chamber **37'** in all embodiments. That is, these test measurements may be made in an outdoor or actual operating environment.

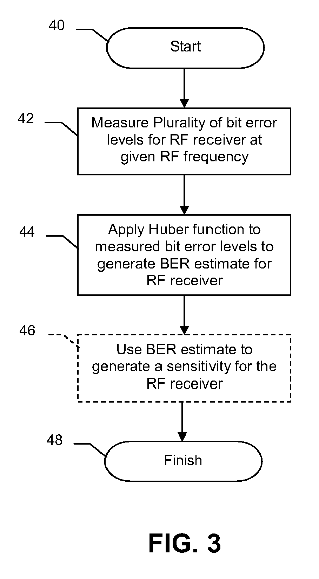

Various method steps that may be performed by the test controller **32** will now generally be described with reference to FIG. 3. As will be appreciated by those skilled in the art, wireless communications devices such as cellular devices may operate over one or more frequency bands, each of which in turn includes numerous operating frequencies or channels. Beginning at Block **40,** a plurality of bit error levels are measured for the RF receiver **32,** at a given one of the RF frequencies, at Block **42.** Measurement of bit error levels is well within the skill of one of ordinary skill in the art using the above-described base station emulators or other tools, and therefore requires no further discussion here.

Once the bit error levels for the given RF frequency are measured, then a Huber function is applied to the measured bit error levels to generate a bit error ratio (BER) estimate, such as residual BER (RBER) estimate, for the RF receiver, at Block **44.** The BER may then optionally be used in determining an RF receiver sensitivity of the receiver **32,** at Block **46,** thus concluding the illustrated method (Block **48).** Further details on determining receiver sensitivity based upon BER are provided in co-pending application no. 11/364,999, which is assigned to the present Assignee and is hereby incorporated herein in its entirety be reference.

As discussed above, BER fluctuates significantly in actual sensitivity measurements, which is why an average value of BER is typically used for estimating the sensitivity of the receiver. Yet, due to large spurious noise in the real communication environment and/or the radio itself, and sudden changes in the test environment, the average BER may even change significantly. The traditional average used in prior art approaches is a least square ($l_2$) method, which is vulnerable to gross errors. That is, if a few spurious data points are present, this can alter the least square average significantly. In order to make this approach more robust against gross error, an $l_1$ method is also sometimes used. However, when the data contains many small errors, the $l_1$ approach can be undesirably biased towards a subset of the data points.

A Huber function may advantageously be used in accordance with one aspect to establish a relatively smoother, less biased estimation for BER, which in turn may be used to determine radio sensitivity, as will be discussed further below. Given measured BER points $X=[x_1, x_2, \ldots, x_n]$, the BER that is the best estimation of the measured data points is $x^*$, which provides an error function of $f_i=x_i-x^*$. The Huber function is defined as:

$$\rho_k(f) = \begin{cases} f^2/2 & if \quad |f| \le k \\ k|f| - k^2/2 & if \quad |f| > k \end{cases} \qquad (1)$$

where k is a positive constant.

The BER may be obtained by solving the following optimization:

$$F(x^*) = \sum_i^n \rho_k(f_i) \,. \qquad (2)$$

The solution for this minimization optimization is different from traditional optimization problems which are usually optimizing $X$. Here, the optimization is finding the value of $x^*$ that most accurately represents the BER. The optimization may be performed iteratively until a minimizer is found having an absolute value less than a given threshold or delta, as will be appreciated by those skilled in the art.

In an unbiased data set where no spurious noise is present, $x^*$ is equal to the average of all the data points. This point can be used for the initial point $x_0$ for the optimization, that is:

$$x_o = \frac{\sum_i^n x_i}{n} \,. \qquad (3)$$

The selection of k is an important factor in finding the optimum value of $x^*$, and may advantageously help speed up the optimization process. In the present example k is chosen to be

$$k = 2\sqrt{\frac{\sum_{1}^{n}(x_i - x^0)}{n-1}} \; . \qquad (4)$$

Generally speaking, k may be in a range of about 0.8 to 1.4, although other values may be used in different embodiments.

With k determined, the data set X can be divided into three subsets, namely:

$$Q = \left\{ x_i \mid \; \left| x_i - x^{*(m)} \right| \leq k, i = 1,2,...,p \right\}$$

$$P = \left\{ x_i \mid \; x_i < x^{*(m)}, i = 1,2,...,q \right\}$$

$$L = \left\{ x_i \mid \; x_i > x^{*(m)}, i = 1,2,...,l \right\} \; , \qquad (5)$$

where $x^{*(m)}$ is the $x^*$ value of m iteration. Furthermore,

$$x^{*(m+1)} = \frac{\sum_{1}^{p} x_j}{p} - \frac{(l-q)}{p}k \; . \qquad (6)$$

The method convergences when

$$\left| x^{*(n+1)} - x^{*(n)} \right| < \delta \; ,$$

where $\delta$ is chosen according to the required sensitivity accuracy. The iteration converges relatively fast for the real or actual case, which makes the method very practical. It can be seen from equation (6) above that for Gaussian distributed data $x^*=x^0$.

The above-described approach is relatively robust against gross errors, as well as being relatively stable against small biased data. This approach may also lead to a more robust sensitivity determination, as well as help to speed up the measurement process. Moreover, using the above-described selection process for determining k, this may result in the exclusion of potentially noisy points. Further, the use of a closed form equation may also contribute to fast convergence optimization, as will be appreciated by those skilled in the art.

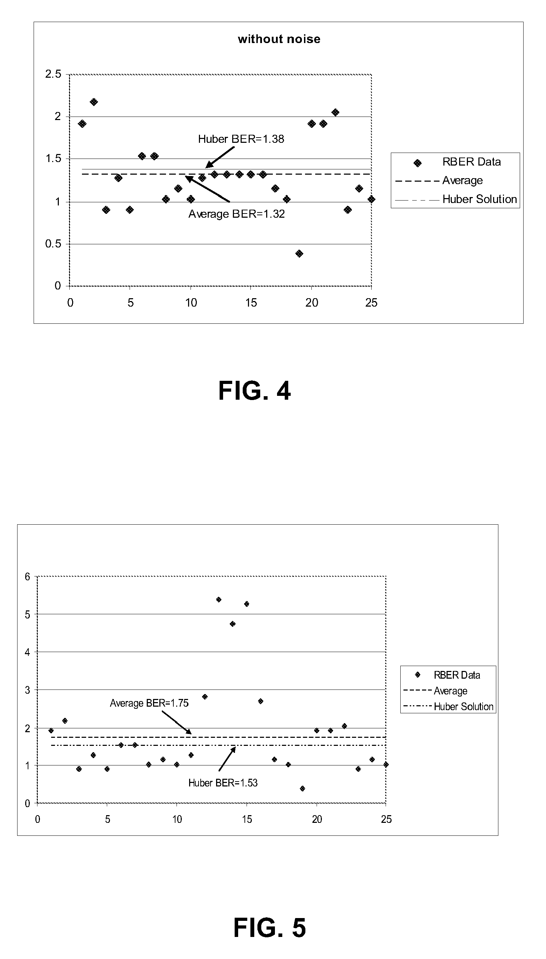

The bit error level data sets illustrated in FIGS. 4 and 5 demonstrate the difference between a traditional average method vs. the Huber approach set forth above without noise and when spurious data points are present in the data set (i.e., with noise), respectively. Sample sets of twenty-five measurements were used in both FIGS. 4 and 5.

For the present example, spurious data was caused by opening the door of a shielded test box, which would not ordinarily be done during a typical test measurement, but is provided here to show how the two approaches can significantly differ in real world scenarios where noise is present. It can be seen that the above-described Huber approach provides a BER that is close to the standard average BER in FIG. 4 without spurious data (i.e., 1.38 for Huber BER vs. 1.32 for average BER). Moreover, with noise (FIG. 5) the Huber BER is significantly more accurate than the standard average (i.e., 1.53 vs. 1.75).

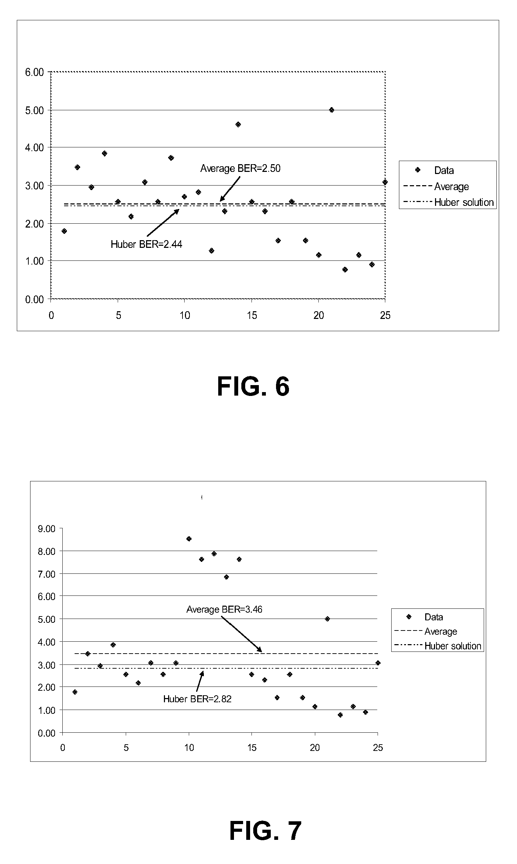

Turning now to FIGS. 6 and 7, real world data sets taken outside (i.e., not in an anechoic chamber) are shown (both of which also include twenty-five sample points) for moderate and severe noise conditions, respectively. The Huber BER was 2.44 and more accurate than the comparable average BER of 2.50 for the moderate noise environment (FIG.

6). In the severe noise environment (FIG. 7), the Huber BER was significantly more accurate, i.e., 2.82 compared to 3.46 for the average BER.

Another potential advantage of the Huber approach is that it can in some instances provide more accurate results than the standard average approach even with less data points. One such example is illustrated in FIG. 8, in which the Huber BER was determined using twenty-five of a total forty data points. As can be seen, the average with no noise using all forty data points was 1.4, and the average with noise using all forty data points was 1.75. Yet, the Huber BER with noise and only twenty-five data points was 1.53. Accordingly, the Huber BER approach may advantageously be used in certain embodiments with less samples, which reduces data sampling time and speeds up the measurements.

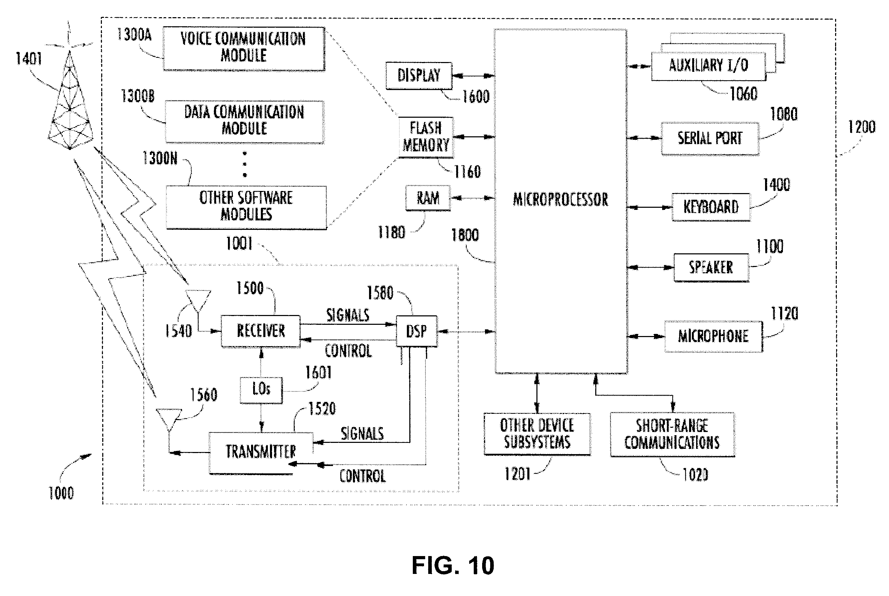

Exemplary components of a hand-held mobile wireless communications device **1000** that may be used in accordance the system **30** is further described in the example below with reference to FIG. 10. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 10. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device 1000 and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

**Claims**

1.   A method for testing a radio frequency (RF) receiver comprising:

measuring a plurality of bit error levels for the RF receiver at a given RF frequency; and
applying a Huber function to the measured plurality of bit error levels to generate a bit error ratio (BER) estimate for the RF receiver.

2.   The method of Claim 1 further comprising using the BER estimate to generate a sensitivity for the RF receiver.

3.   The method of Claim 1 wherein the Huber function is defined as:

$$\rho_k(f) = \begin{cases} f^2/2 & if \quad |f| \le k \\ k|f| - k^2/2 & if \quad |f| > k \end{cases}$$

where k is a positive constant.

4.   The method of Claim 3 wherein k is defined as:

$$k = 2\sqrt{\frac{\sum_{1}^{n}(x_i - x_0)}{n-1}} ,$$

where $x_0$ is an initial bit error level and n is a total number of bit error levels.

5. The method of Claim 4 wherein the initial bit error level $x_0$ is defined as:

$$x_o = \frac{\sum_i^n x_i}{n} .$$

6. The method of Claim 3 wherein k is within a range of about 0.8 to 1.4.

7. The method of Claim 1 wherein measuring comprises measuring the plurality of bit error levels within an anechoic RF chamber.

8. The method of Claim 1 wherein measuring comprises measuring the plurality of bit error levels in an outdoor environment.

9. The method of Claim 1 wherein the BER estimate comprises a residual BER (RBER) estimate.

10. The method of Claim 1 wherein the RF receiver comprises a Global System for Mobile Communications (GSM) receiver.

11. The method of Claim 1 wherein the RF receiver comprises a General Packet Radio Service (GPRS) receiver.

12. The method of Claim 1 wherein the RF receiver comprises an Enhanced Data Rates for Global System for Mobile Communications (GSM) Evolution (EDGE) receiver.

13. A test system for testing a radio frequency (RF) receiver comprising:

an RF source; and
a test controller coupled to the RF receiver for

measuring a plurality of bit error levels for the RF receiver based upon transmissions from the RF source at a given RF frequency, and
applying a Huber function to the measured plurality of bit error levels to generate a bit error ratio (BER) estimate for the RF receiver.

14. The test system of Claim 13 wherein said test controller is also for generating a sensitivity for the RF receiver using the BER estimate.

15. The test system of Claim 13 wherein the Huber function is defined as:

$$\rho_k(f) = \begin{cases} f^2/2 & if & |f| \le k \\ k|f| - k^2/2 & if & |f| > k \end{cases}$$

where k is a positive constant.

16. The test system of Claim 15 wherein k is defined as:

$$k = 2\sqrt{\dfrac{\sum\limits_{1}^{n}(x_i - x^0)}{n - 1}} \ ,$$

where $x_0$ is an initial bit error level and n is a total number of bit error levels.

17. The test system of Claim 15 wherein k is within a range of about 0.8 to 1.4.

FIG. 1

30'

31'    35'    33'    36'

RF Source
(Base Station
Emulator)

Handheld
Device Receiver
(e.g., GSM,
GPRS, EDGE)

32'

37'

Anechoic Chamber

Test Controller

34'

o Measure bit error levels for
RF receiver at given RF
frequency
o Apply Huber function to
measured bit error level to
generate BER estimate for
RF receiver

**FIG. 2**

40 — Start

42 — Measure Plurality of bit error levels for RF receiver at given RF frequency

44 — Apply Huber function to measured bit error levels to generate BER estimate for RF receiver

46 — Use BER estimate to generate a sensitivity for the RF receiver

48 — Finish

# FIG. 3

FIG. 4

FIG. 5

# FIG. 6

# FIG. 7

FIG. 8

FIG. 9

**FIG. 10**

EP 1 995 897 A1

**European Patent Office**  **EUROPEAN SEARCH REPORT**

Application Number

EP 07 10 8553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 5 691 988 A (YAMADA KATSUJI [JP] ET AL) 25 November 1997 (1997-11-25) * abstract * * column 3, line 19 - line 35 * * claims 1-3 * ----- | 1-17 | INV. H04B17/00 |
| A | EP 1 126 640 A (WESTINGHOUSE AIR BRAKE CO [US]) 22 August 2001 (2001-08-22) * abstract * * paragraph [0008] * * claims 1,3 * ----- | 1-17 | |

TECHNICAL FIELDS SEARCHED (IPC)

H04B

The present search report has been drawn up for all claims

| Place of search | Date of completion of the search | Examiner |
|---|---|---|
| Munich | 25 September 2007 | Mier, Ana |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.**

EP 07 10 8553

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2007

| Patent document cited in search report | | Publication date | Patent family member(s) | | Publication date |
|---|---|---|---|---|---|
| US 5691988 | A | 25-11-1997 | JP | 3536072 B2 | 07-06-2004 |
| | | | JP | 8149022 A | 07-06-1996 |
| EP 1126640 | A | 22-08-2001 | NONE | | |

EPO FORM P0459

For more details about this annex : see Official Journal of the European Patent Office, No. 12/82

**EP 1 995 897 A1**

### Patent documents cited in the description

- US 6792053 B, Vainio
- US 11364999 B